# EUROPEAN PATENT APPLICATION

(11) **EP 1 203 535 A1**
(43) Date of publication of application: **08.05.2002**
(21) Application number: 00944054.6
(22) Date of filing: 12.07.2000
(51) Int. Cl.: A23L 1/172, A23L 1/10, C07H 11/04

(54) **APPLICATION OF SEED MEALS OF CERTAIN CEREALS TO THE FABRICATION OF FOOD PRODUCTS USEFUL FOR THE TREATMENT OF PHYTATE DEFICIENCY CONDITIONS**

(30) Priority: 16.07.1999 ES 9901602
(71) Applicant: Universitat de les Illes Balears, 07120 Palma de Mallorca (ES); Industrias Agricolas de Mallorca, S.A., Pont d'Inca, 07009 Mallorca (ES)
(72) Inventor: COSTA BAUZA, A. Campus Uni., 07120 Palma de Mallo rca (ES); GRASES FREIXEDAS, Feliciano Campus Universitari, 07120 Palma de Mallo rca (ES)
(74) Representative: Ungria Lopez, Javier
(86) International application number: ES0000248
(87) International publication number: WO0105249

(57) **Abstract**

The present invention refers to the use of germ flour of cereals such as carob, wheat, rye, corn or mixtures thereof in the manufacture of food products rich in phytates for the treatment or prevention of pathological or pre-pathological conditions derived from phytate deficient states, and in particular kidney stones.

## Description

### TECHNICAL FIELD OF THE INVENTION

The present invention fits in the food industry sector, providing food products rich in phytates, that are useful in treating pathological or pre-pathological conditions derived from phytate deficient states.

### PRIOR ART OF THE INVENTION

Up until very recently, the importance of phytic acid (inositol hexaphosphate) and phytates in the human diet has not been recognized. Furthermore, it has been considered an antinutrient given that, consumed in large doses, it can interfere in the bioavailability of certain mineral elements (calcium, iron, zinc) (J.L. Kelsay, Am. J. Gastroenterol. 82, 983-986, 1987).

However, recent studies show that phytates have beneficial and unsuspected effects on health. Hence, it has been evidenced that they are present in biological fluids (blood, interstitial liquids, urine, etc.) and that they exert a strong inhibitory action of the crystallization of calcium salts such as phosphates and oxalates, which prevent the formation of pathological mineral deposits such as, for example, renal calculi (F. Grases, A. Costa-Bauzá, Anticancer Res., 19, 1999). Likewise, it has also been evidenced that the levels of phytates in urine and blood drop to practically undetectable values after 10 days without a phytate intake (F. Grases, B.M. Simonet, J.G. March, R.M. Prieto, Brit. J. Urol. In print).

Phytates also reduce the glucose levels in the blood, with the subsequent beneficial effects in the control of diabetes, due to their capacity to bond to intestinal amylase reducing the activity thereof and consequently reducing the release of simple sugars.

It has also been suggested that, due to their antioxidizing capacity, phytates can exert a protective action against colon cancer (A.M. Shamsuddin, I. Vucenik, K.E. Cole, Life Science 61, 343-354, 1997). This action is additionally reinforced by their capacity to inactivate α-amylase, making that part of the starch reach the colon undigested, where it can then be fermented by the bacterial flora producing short chain fatty acids that, upon lowering the pH, cause a reduction of the solubility of the biliary acids and a neutralization of the ammonia, which seem to promote tumors.

Another beneficial effect of phytates is their capacity to reduce the concentration of cholesterol and triglycerides in blood, with the subsequent positive repercussions on cardiovascular problems (J.R. Zhu, J.W. Erdman. Crit. Rev. Food Sci. Nutr. 35, 495-508, 1995).

The above-cited aspects evidence the importance to the health of the existence of suitable levels of phytates in the body. Hence, just as it happens with vitamins, phytates should be present in the body in amounts such that they exceed a specific threshold value in order to be effective, but not too high so as to reduce the bioavailability of certain trace elements.

On the other hand, it is also known that flour coming from the germ of certain cereals is rich in phytates and also has a high content of protein, some minerals and vitamins.

The problem lies on the fact that nowadays the processes for refining such flour drastically reduce the original phytate content of the cereal, giving rise to phytate deficient states of more or less importance for the body.

In accordance with the above, the applicant's research efforts have been directed towards taking advantage of these natural phytate sources in order to compensate for these deficiencies especially in individuals with pathological or pre-pathological conditions of kidney stones, for whom the intake of phytates proves to be essential.

### DETAILED DESCRIPTION OF THE INVENTION

As indicated in the title, the present invention refers to the use of germ flour of certain cereals in the manufacture of food products useful in treating phytate deficient states.

The cited cereals are mainly carob, wheat, rye, corn and mixtures thereof. The germ flour of these cereals has a high phytate content. Table 1 below shows certain illustrative data of said phytate contents (J.G. March, B.M. Simonet, F. Grases, The Analyst, 1999; B.F. Harland, O. Ober-leas, Wld. Rev. Nutr. Diet., 52, 235-259, 1987).

**Table 1**

| **Cereal** (germ flour) | **Phytate** (mg/g of dry weight) |
|---|---|
| Carob | 20.0 |
| Corn | 19.4 |
| Wheat | 46.0 |
| Rye | 20.8 |

In accordance with the present invention, the use of such flour, duly elaborated, so that it does not lose phytates, in the manufacture of food products rich in phytates, used to treat pathological and pre-pathological states derived from the consumption of diets poor or lacking in phytates, is proposed.

Said use is especially interesting in those individuals suffering from or with a predisposition to suffer from kidney stones, wherein the applicant has evidenced that the intake of phytic acid and phytates is very appropriate.

Following this line, the applicants have been able to evidence that the intake of a diet supplemented with products rich in phytates significantly increases the levels in the blood and urine, until maximum urinary excretions are reached that correspond to 1-5% of the total intake (F. Grases, R. García-González, J.J. Torres, A. Llobera, Scand. J. Urol. Nephrol. 32, 261-265, 1998). Once these maximum values have been reached, the increase of the amount of phytate intake does not increase the amounts in the blood and urine.

From these studies it is additionally inferred that the daily intake of between 30 and 60 g of the germ flour of the cited cereals may be sufficient to maintain suitable levels in the blood and urine so as to achieve the beneficial effects on health that have been indicated above.

For the manufacture of the products in accordance with the present invention it is necessary that the germ is processed in such a way that it does not lose its natural phytate content. For this purpose, the germ flour of cereals should be manufactured in such a way that the germ is mechanically separated from the rest of the grain, without the resulting product being subsequently subjected to any chemical treatment (for example, the carob germ should not be subjected to treatment with sulfuric acid for a decolorizing purpose). In this way it is possible to avoid up to the highest extent the hydrolytic processes of phytates that would give rise to the loss of content thereof in the flour.

The flour rich in phytates thus obtained can be manufactured in the form of biscuits, muesli, pastries, buns, etc.

The flour rich in phytate in accordance with the present invention can be mixed with conventionally used flour in order to achieve proportions of phytates in the final manufactured products comprised between 800 and 1600 mg of phytic acid per 100 g of product.

Experiments conducted by researchers have proved that individuals in a pathological or pre-pathological condition of kidney stones have improved considerably after a certain time of an intake of a diet supplemented with products made from said carob, corn, wheat and rye flour and mixtures thereof.

Hence, a study has been conducted on 74 individuals with oxalocalcium kidney stones with normal kidney function, normal calcium levels in urine, without urinary infection and that have not been subjected to any prior pharmacological treatment. These individuals have been divided into three groups: 19 individuals with kidney stones (Group I), 38 individuals with kidney stones (Group II) and 17 individuals with kidney stones (Group III). The urinary risk to form calcium kidney stones was evaluated for each individual before being subjected to any pharmacological treatment.

After this evaluation, Group I did not receive any treatment. Group II was treated with potassium citrate tablets (the citrate is an inhibitor of the crystallization of calcium salts that is traditionally used to treat calcium kidney stones) at a dose of 6.48 g of citrate/day, and Group III received a dietetic supplement rich in phytate corresponding to a dose of 120 mg of phytate/day.

15 days after treatment starting, the urinary risk of forming calcium kidney stones was evaluated again for each individual. The risk of forming calcium stones dropped 52% in the individuals treated with the citrate and 50% in the individuals treated with phytate and it only dropped 7% in the individuals that were not subjected to any treatment. When the treatment was not effective, in most cases the urine contained high levels of calcium or had a pH higher than 6.5.

These results show the effectiveness of the treatment of calcium kidney stones with phytate, since the results obtained are similar to the ones observed using citrate, with the advantage that phytate does not cause increases of the urine pH and it is effective when much lower doses are used (A. Conte, P. Pizá, A. García-Raja, F. Grases, A. Costa-Bauzá, R.M. Prieto, Arch. Esp. Urol., 52, 305-310, 1999). Besides it has an important antioxidizing effect that the citrate does not have (F. Grases, L. García-Ferragut, A. Costa-Bauzá. Nephron, 78, 296-301, 1998).

Phytate absorption is fundamentally produced at the stomach level since the acid pH thereof increases the lipophilicity of the phytates upon inducing the protonation thereof, facilitating their absorption as phytic acid (F. Grases, B.M. Simonet, J.G. March, R.M. Prieto, Brit. J. Urol, In print). On the other hand, the phytates excreted in the urine is dose-dependent but there is an intake (20.9 mg/kg of body weight) above which the excreted amount does not increase no matter how much the intake dose increases, a fact which can be explained by considering that the maximum absorbed amount is limited by the area of the mucous membrane of the stomach. On the other hand, it is shown that these doses in which maximum excretions are produced, do not affect the bioavailability of oligoelements such as Zn(II) and Fe(III) (J.L. Kelsay, Am. J. Gastroenterology, 82, 983-986, 1987), in such a way that even a megadose of 8.8 g/day does not produce any toxicity (P.H. Henneman, P.H. Benedict, A.P. Forber, H.R. Dudley, N. Eng. J. Med., 17, 802-807, 1958).

### EMBODIMENTS OF THE INVENTION

The present invention is additionally illustrated by the following examples, which should not be considered as restrictive of the scope hereof.

### Example 1: Cereal bars

Presentation: 23 g cereal bars
Composition per 100 g:
- 30 g of carob germ flour
- 30 g of corn germ flour
- 31 g of refined wheat flour
- 7 g of grated coconut
- 2 g of glucose, honey, lactose, milk protein, sugar, flavoring agent.

### Example 2. Muesli

Presentation: boxes of 230 g
Composition per 100 g:
- 30 g of carob germ flour
- 20 g of wheat germ flour
- 24 g of cereals (rice, oat, wheat)
- 8 g of grated coconut fakes
- 4 g of chopped walnuts
- 4 g of raisins
- 4 g of chopped almonds
- 3 g of dried apple
- 3 g of honey and sugar

## Claims

1. Use of germ flour of cereals in the manufacture of food products rich in phytates for the treatment or prevention of pathological or pre-pathological conditions derived from phytate deficient states.

2. Use of germ flour of cereals, according to claim 1 **characterized in that** the cereal is selected from the group formed by carob, wheat, rye, corn or any mixture thereof.

3. Use of germ flour of cereals, according to claim 1 **characterized in that** the flour is used in the diet in a daily proportion of 30 to 60 g.

4. Use of germ flour of cereals, according to claim 1 **characterized in that** the pathological condition is kidney stones.
